# EUROPEAN PATENT APPLICATION

(11) **EP 1 359 549 A2**
(43) Date of publication of application: **05.11.2003**
(21) Application number: 02019302.5
(22) Date of filing: 28.08.2002
(51) Int. Cl.: G07F 7/10

(54) **Prepaid credit card**

(30) Priority: 29.04.2002 AM 20020067
(71) Applicant: General Technology Services Company s.a.l, Bierut (LB)
(72) Inventor: Daouk, Fadi, Beyrouth (LB)
(74) Representative: Grünecker, Kinkeldey, Stockmair & Schwanhäusser Anwaltssozietät

(57) **Abstract**

The invention concerns the Prepaid Credit Cards and can be utilized for service paying or trade transactions in the systems having the possibility to work by credit cards...

The electronic numerical information about card's serial number and the latest date of transactions performing is enclosed and registered into the card, while on one side of the card sides there is a section with plotted on it visual information about card's serial number and the latest date of transactions performing; moreover, this section is covered by masking layer which can be erased.

The universality of the credit card as well as its using security are heightened.

## Description

The invention concerns the prepaid credit cards and can be applied for service paying or trade transactions in the systems, which have the possibility to work by credit cards. There is known a system of transactions paying by Prepaid Internet Card, according to it credit card has the possibility of electronic numerical codified information's input and registration [Int. application WO 0159722].

The known system is destined for transactions performing exclusively on Internet connection and excludes the possibility of transaction performing by other means.

It is known also, taken by us as a prototype, credit card, on which serial number, composed of several symbols, arranged along lines of different configurations, is plotted [Patent application of Russia No. 97115232, Int. Cl: B42D 15/00 (priority application No. 19633394.6 - DE)].

The known credit card is also not universal for transactions performing by different means, while multiple repeated visual information about card's serial number decreases its using security degree.

The invention task is to heighten the functional universality of credit card as well as its using security.

The invention essence is in the inputting and registering of the electronic numerical information about serial number of card and transactions performing latest date into the Prepaid Credit Card; while on one of the card sides there is a section with plotted on it visual information about card serial number and the latest date of transactions performing, and what's more this section is covered by masking layer, which can be erased.

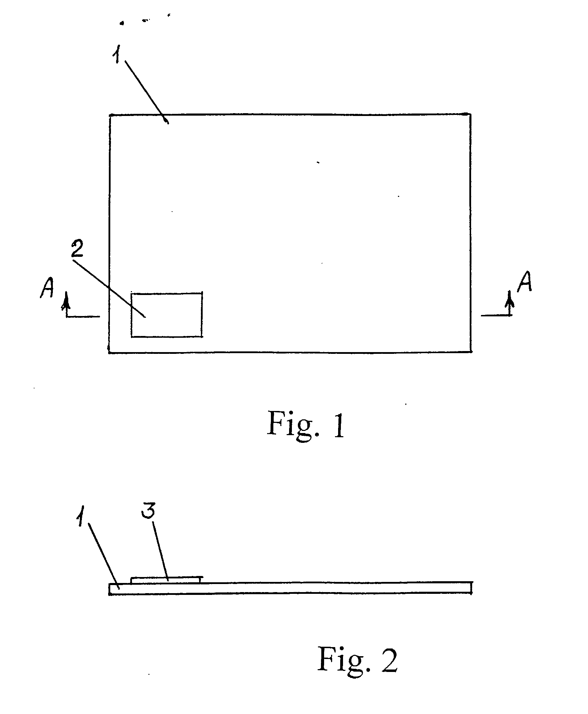

In Figure 1 there is shown the card contour, and in Figure 2 the card cut along A-A is portrayed.

The plastic card (1) has the construction and dimensions of credit cards, having got the international acceptance and distribution, and the corresponding artistic shape.

There is a section (2) on one of the card sides, which is covered by masking layer (3). The cover (3) can be erased, i.e. it can be removed by one of the accessible manners, e.g. by scratching (scrubbing).

The credit card is preliminary paid by purchaser and has fixed value, e.g. 50, 100 or 150 dollars of the USA. Credit card value is given on its surface by visual means.

Each copy of credit card has, composed of several symbols, its serial number, which by means of electronic numerical means is taken into a microprocessor of the card and is registered in it. Besides, card's serial number is plotted by visual means on section (2) of the card's surface and is covered by masking layer (3).

The credit card has limited validity time. The expiration date by electronic numerical means is enclosed into a microprocessor of the card and is registered in it. Besides, validity term of card's expiration date is plotted by visual means on section (2) of the card surface and is covered by masking layer (3).

The credit card can have a magnetical strip, the presence of the latter gives the possibility of service paying or transactions making by other means than Internet connection.

The credit card is anonymous, i.e. it does not contain information about holder's personality.

The suggested card is utilized, when it is undesirable for privacy or security reasons the usage of the regular credit card, as well as in case the access to the bank account is closed and the usage of the regular credit card is impossible.

The credit card is applied in the following manner. After cost paying and receiving of a credit card, a holder removes the masking layer (3) from the section (2) of the card and gets visual information about serial card number and expiration date of card's validity.

The transactions paying is performed on Internet connection by means of card serial number reporting, while in the presence of magnetical strip by means of other facilities as well on a level with well-known cards (Visa, Master Card, Carte Bleue, etc.)

The information about the remaining balance on the card a holder may get both on the Internet connection, addressing to the corresponding site and inputting the serial number of his card, and on any Automatic Teller Machine.

After the date expiring of the credit card the remaining unused balance will be the property of the company-establisher, if the credit card is not "recharged". Such a "recharge" (additional payment) is possible before a card's expiry date.

## Claims

1. Prepaid Credit Card with the possibility of electronic numerical codified information inputting and registering for service paying or trade transactions is **characterized by** inputting and registering of electronic numerical information about card's serial number and the latest date of transactions performing; while on one of the card sides there is a section with plotted on it visual information about the card's serial number and the latest date of transactions performing, covered by masking layer with the possibility of its removal.
